# EUROPÄISCHE PATENTANMELDUNG

(11) **EP 4 656 744 A1**
(43) Veröffentlichungstag der Anmeldung: **03.12.2025**
(21) Anmeldenummer: 24178626.8
(22) Anmeldetag: 28.05.2024
(51) Int. Cl.: C21D 9/18, C22C 38/02, C22C 38/04, C22C 38/40, B23P 15/40, C21D 7/10

(54) **BANDSTAHLMESSER**

(71) Anmelder: voestalpine Precision Strip GmbH, 3333 Böhlerwerk (AT)
(72) Erfinder: Haas, Anton, 3321 Ardagger Stift (AT); Frauendorfer, Günther, 4332 Au an der Donau (AT)
(74) Vertreter: Jell, Friedrich

(57) **Zusammenfassung**

Es wird ein Verfahren zum Härten einer Schneidkante (3) einer Schneide (2) eines, ein Grundgefüge (7) aufweisenden Bandkörper (5), aus einer durch Kaltumformen verfestigbaren Stahllegierung, eines Bandstahlmessers (1) und dieses Bandstahlmessers (1) gezeigt. Um am Bandstahlmessers (1) eine hohe Schneidleistung und Verschleißfestigkeit zu ermöglichen, wird vorgeschlagen, dass der distale Schneidkantenbereich (4a) ein kaltverfestigtes, insbesondere kaltgewalztes, Gefüge (6) aufweist, dessen sich in proximale Richtung (R) der Schneide (2) verringernde Härte (HV) bis zumindest zu einer Härtetiefe (t) von 0,2 mm, insbesondere 0,45 mm, stets über der mittleren Härte (HV) eines an dieses kaltverfestigte Gefüge (6) anschließenden Grundgefüges (7) des Bandkörpers (5) liegt.

## Beschreibung

Die Erfindung betrifft ein Verfahren zum Härten einer Schneidkante einer Schneide eines, ein Grundgefüge aufweisenden Bandkörpers, aus einer durch Kaltumformen verfestigbaren Stahllegierung, eines Bandstahlmessers sowie dieses Bandstahlmesser, wobei der Bandkörper ein Grundgefüge aufweist und wobei die Schneide in einem distalen und die Schneidkante aufweisenden Schneidkantenbereich eine erhöhte Härte aufweist.

Zur Verbesserung der Standfestigkeit eines Bandstahlmessers für ein Werkzeug zur Bearbeitung von flächigem Material ist es bekannt (EP 3 586 991 B1) einen Schneidkantenbereich einer Schneide des Bandstahlmessers einer thermischen Vergütung und damit einem Umwandlungshärten zu unterziehen. Dieser Prozess umfasst das Erwärmen des Werkstoffs, um ein austenitisches Gefüge oder teilaustenitisches Gefüge zu erzeugen, gefolgt von einer schnellen Abkühlung, damit sich Martensit im Gefüge ausbildet, der in weiterer Folge angelassen wird. Solch ein Umwandlungshärten eines Teilbereichs der Schneide beeinflusst jedoch auch das Grundgefüge des Bandkörpers, was zu unerwünschten Eigenschaften im Übergang zwischen dem Gefüge im distalen Schneidkantenbereich und dem Grundgefüge des Bandkörpers führen kann. Mit einer reduzierten Stützwirkung des vergüteten Schneidkantenbereichs ist zu rechnen, was nachteilig die Stabilität der Schneide und damit die Standfestigkeit des Bandstahlmessers beeinflusst.

Um diesen nachteiligen Einfluss reduzieren, sind vergleichsweise aufwendige und verfahrenstechnisch schwierig zu steuernde/regende Verfahren bekannt, beispielsweise solche, die besonders rasch aufheizen und abkühlen.

Zudem benötigen derartige thermische Verfahren vergleichsweise hohe Energiemengen.

Die Erfindung hat sich daher die Aufgabe gestellt, ein Verfahren zu schaffen, mit dem kostengünstig und reproduzierbar an der Schneide des Bandstahlmessers eine hohe Härte geschaffen, dennoch aber die Duktilität des Bandkörpers dadurch unbeeinflusst bleiben kann. Zudem soll dieses Verfahren homogene Eigenschaften am Bandstahlmesser sicherstellen können und sich durch geringe Herstellkosten auszeichnen können.

Die Erfindung löst die gestellte Aufgabe durch die Merkmale des Anspruchs 1.

Wird höchstens partiell an der Schneide und das zumindest an der Schneidkante ein Kaltumformen durchgeführt und damit eine distaler Schneidkantenbereich mit einem kaltverfestigten Gefüge erzeugt, kann damit auf ein thermisches Vergüten und damit Umwandlungshärten verzichtet, dennoch aber für eine ausreichende Härte in diesem Bereich der Schneide gesorgt werden. Das Kaltumformen kann beispielsweise ein Druckumformen (nach DIN 8583) sein. Auch ist ein Kaltwalzen denkbar.

Das Kaltumformen kann nämlich die Versetzungsdichte im Grundgefüge erhöhen und/oder im Grundgefüges dehnungsinduzierten Verformungsmartensit erzeugen, was Härte und Festigkeit der Schneide erhöht. Damit kann ein kaltverfestigtes Gefüge erzeugt werden, dessen sich in proximale Richtung der Schneide verringernde Härte bis zumindest zu einer Härtetiefe von 0,2 mm stets über der mittleren Härte des an dieses kaltverfestigte Gefüge anschließenden Grundgefüges des Bandkörpers liegt. Beispielsweise liegt die Härte bis zumindest zu einer Härtetiefe von 0,3, 0,4, 0,45 oder 0,5 mm stets über der mittleren Härte des an dieses kaltverfestigte Gefüge anschließenden Grundgefüges.

Dies führt sohin reproduzierbar zu einem Bandstahlmesser mit hoher Schneidleistung und Verschleißfestigkeit.

Zudem kann durch dieses besondere Verfestigen des Schneidkantenbereichs unter Schonung des Grundgefüges die Forderung erfüllt werden, nämlich auf einem vergleichsweise duktilen Bandkörper eine vergleichsweise harte Schneide zu ermöglichen.

Des Weiteren ist im Vergleich mit dem bekannten Umwandlungshärten das erfindungsgemäße Kaltumformen vergleichsweise einfach handzuhaben - dies insbesondere, wenn ein Kaltwalzen verwendet wird. Auch benötigt das erfindungsgemäße Verfahren keine thermische Behandlung zur Härtung der Schneide, was nicht nur die Taktzeiten, sondern die Herstellkosten weiter reduzieren kann.

Schneidleistung und Verschleißfestigkeit kann weiter erhöht werden, wenn an der Schneidkante die Härte nach EN ISO 6507 zumindest 580 HV beträgt. Beispielsweise beträgt diese Härte nach EN ISO 6507 zumindest 600 HV.

Vorstellbar ist zudem, dass diese Härte nach EN ISO 6507 bis zumindest zu einer Härtetiefe von 0,05 bis 0,10 mm besteht.

Für eine ausreichend hohe Versetzungsdichte und/oder auch für einen ausreichend hohen Anteil an dehnungsinduzierter Verformungsmartensit kann beispielsweise gesorgt werden, wenn das Kaltumformen zumindest an der Schneidkante mit einem Gesamtumformgrad im Bereich von größer 70 % durchgeführt wird. Beispielsweise ist der Gesamtumformgrad im Bereich von größer 75 %.

Zudem kann durch derart hohe Kaltumformgrade die Reproduzierbarkeit in der Herstellung der Schneidkante mit einer ausreichend hohen sowie in proximale Richtung tief reichenden Härte weiter verbessert werden.

Vorstehendes auch in handhabbarer Weise, indem das Kaltumformen mehrstufig mit zueinander unterschiedlich oder gleich hohen Umformgraden durchgeführt wird.

Vorzugsweise wird das Kaltumformen an zumindest zwei sich an der Schneide gegenüberliegenden Schneidfacetten, insbesondere gleichzeitig, durchgeführt. Damit kann beispielsweise reproduzierbarer gleichmäßig Verformungsmartensit und/oder Versetzungen im distaler Schneidkantenbereich ausgebildet werden, was zu Vorteilen hinsichtlich Zähigkeit und Widerstandsfähigkeit gegen unerwünschte plastische Verformung führen kann.

Das Verfahren kann weiter verbessert werden, wenn beim Kaltumformen ein Aufmaß an der Schneide mitumgeformt wird. Mit solch einem Aufmaß kann beispielsweise ein erhöhter Umformgrad erreicht werden, was die Reproduzierbarkeit in der Herstellung eines Bandstahlmessers mit den gewünschten Eigenschaften verbessern kann.

Die Oberfläche der Schneide kann im Verfahren reproduzierbarer maßgenau erzeugt werden, wenn nach dem Kaltumformen an der Schneide eine, insbesondere spanende, Feinbearbeitung, insbesondere ein Schleifen, erfolgt.

Zudem kann mithilfe solch einer Feinbearbeitung eine vergleichsweise glatte Oberfläche und scharfe Schneidkante erzeugt werden, was die Herstellung eines effizient und präzise schneidenden Bandstahlmessers erleichtern kann.

Dies insbesondere dann, wenn mit der Feinbearbeitung ein Schneidenwinkel eingestellt wird. Dieser Schneidenwinkel kann im Bereich 30 bis 60 Grad liegen.

Auch ist vorstellbar, dass mit der Feinbearbeitung ein Schneidenradius an der Schneidkante eingestellt wird. Dieser Schneidenradius kann bis zu 50 µm, beispielsweise zwischen 4 und 50 µm, betragen.

Die Erfindung hat sich zudem die Aufgabe gestellt, ein Bandstahlmesser zu schaffen, das eine hohe Schneidleistung und Verschleißfestigkeit aufweist.

Die Erfindung löst die gestellte Aufgabe durch die Merkmale des Anspruchs 7.

Indem die Schneide in deren distale Schneidkantenbereich ein kaltverfestigtes, insbesondere kaltgewalztes, Gefüge aufweist, kann erfindungsgemäß mit dieser Optimierung des Gefüges die Festigkeit und Zähigkeit der Schneide deutlich verbessert werden.

Dieses Kaltverfestigen, was beispielsweise durch ein Druckumformen nach DIN 8583, beispielsweise Kaltwalzen, erfolgen kann, kann nämlich im Gefüge die Versetzungsdichte erhöht und/oder dehnungsinduzierten Verformungsmartensit erzeugen.

Damit weist der distale Schneidkantenbereich ein kaltverfestigtes, insbesondere kaltgewalztes, Gefüge auf, dessen sich in proximale Richtung der Schneide verringernde Härte bis zumindest zu einer Härtetiefe von 0,2 mm, insbesondere 0,45 mm, stets über der mittleren Härte eines an dieses kaltverfestigte Gefüge anschließenden Grundgefüges des Bandkörpers liegt.

Ein Bandstahlmesser mit hoher Schneidleistung und Verschleißfestigkeit ist damit geschaffen.

Die Schneidleistung und Verschleißfestigkeit kann weiter verbessert werden, wenn an der Schneidkante die Härte nach EN ISO 6507, insbesondere bis zumindest zu einer Härtetiefe (t) von 0,05 bis 0,10 mm, zumindest 580 HV beträgt. Beispielsweise beträgt an der Schneidkante die Härte nach EN ISO 6507 zumindest 600 HV.

Vorzugsweise weist hierzu die Schneide einen Schneidenwinkel im Bereich von 30 bis 60 Grad auf.

Auch kann die Schneide einen Schneidenradius bis zu 50 µm aufweisen. Dieser Schneidenradius kann beispielsweise zwischen 4 und 50 µm liegen.

Beispielsweise weist das kaltverfestigte Gefüge Versetzungen mit einer Versetzungsdichte von größer 10¹³ m⁻² auf, was die Festigkeit und Härte der Schneide weiter erhöhen und somit die mechanischen Eigenschaften des Bandstahlmessers weiter verbessern kann. Eine hohe Versetzungsdichte erschwert zudem eine weitere unerwünschte plastische Verformung. Die kaltverfestigte Schneide kann sich daher besonders geeignet für Anwendungen mit hohen mechanischen Belastungen und langer Lebensdauer.

Weist das kaltgehärtete Gefüge einen dehnungsinduzierten Verformungsmartensit auf, kann Festigkeit und Härte der Schneide weiter verbessert werden. Dieser dehnungsinduzierte Verformungsmartensit liegt nämlich im Wesentlichen in einer feiner verteilten und gleichmäßigeren Mikrostruktur im Gefüge vor, als dies beispielsweise bei spannungsinduzierten Verformungsmartensit der Fall ist. Damit kann sich erfindungsgemäß ein Gefüge ergeben, welches jenem durch Umwandlungshärten bekannten Härtegefüge ähnelt, ohne aber damit die bekannten Nachteile des Umwandlungshärtens auf andere Gefügebereiche in Kauf nehmen zu müssen.

Zudem kann die gleichmäßigere Mikrostruktur des Verformungsmartensits Vorteile hinsichtlich Zähigkeit und Widerstandsfähigkeit gegenüber Rissausbreitung verbessern, was die Standfestigkeit des Bandstahlmessers selbst bei hohen mechanischen Schneidbelastungen weiter erhöht.

Dies insbesondere dann, wenn das kaltverfestigte Gefüge einen dehnungsinduzierten Verformungsmartensit mit einem Volumenanteil größer gleich 25 % aufweist. Bevorzugt liegt der Volumenanteil im Bereich von 25 bis 40 %. Damit steht nämlich in der Mikrostruktur neben Austenit eine ausreichend hoher Anteil an Verformungsmartensit zur Verfügung, die erfindungsgemäßen Eigenschaften am Bandstahlmessers zu ermöglichen.

Des Weiteren ist vorstellbar, dass das Grundgefüge des Bandkörpers ein austenitisches Gefüge ist. Vorzugsweise ist die Stahllegierung ein korrosionsbeständiger Cr-Ni Stahl. Dieser kann sich beispielsweise durch eine erhöhte Beständigkeit gegenüber Korrosion auszeichnen.

Auch ist vorstellbar, dass das Grundgefüge des Bandkörpers ein ferritisch, ferritischperlitisches oder bainitisches Gefüge ist.

Mit einem derartigen, insbesondere austenitischen oder bainitischen, Grundgefüge kann zunächst die plastische Verformbarkeit des Bandstahlmessers für jeweils spezifischen Verwendungszweck gewährleistet bleiben, um dieses so an einen gewünschten Längsverlauf anzupassen und/oder um dieses in ein Werkzeug einzusetzen. Das erfindungsgemäße Bandstahlmesser ist daher besonders einfach handzuhaben.

Zudem kann mit solch einem Grundgefüge des Bandkörpers eine Gefahr eines Sprödbruches weiter verringert werden, was die Standfestigkeit des Bandstahlmessers weiter erhöhen kann.

### Vorzugsweise weist die Stahllegierung jeweils in Gew.-%

| | | |
|---|---|---|
| 0,01 bis 0,15, | insbesondere 0,05 bis 0,15, | Kohlenstoff (C), |
| 15,0 bis 20,0, | insbesondere 16,0 bis 19,0, | Chrom (Cr), |
| 6,0 bis 14,0, | insbesondere 6,0 bis 9,5, | Nickel (Ni), |

und als Rest Eisen (Fe) sowie herstellungsbedingt unvermeidbare Verunreinigungen aufweist. Optional einzeln oder in Kombination aus der Gruppe kann diese Stahllegierung aufweisen:

| | | |
|---|---|---|
| 0 bis 2,0 | | Silizium (Si) |
| 0 bis 2,0 | | Mangan (Mn) |
| 0 bis 3,0, | insbesondere 0 bis 1,0, | Molybdän (Mo) |
| 0 bis 1,0 | | Kupfer (Cu) |
| 0 bis 0,30 | | Vanadium (V) |
| 0 bis 0,20 | | Titan (Ti) |
| 0 bis 0,20 | | Niob (Nb) |
| 0 bis 0,20 | | Aluminium (Al) |
| 0 bis 0,05 | | Phosphor (P) |
| 0 bis 0,01 | | Kalzium (Ca) |
| 0 bis 0,01 | | Schwefel (S) |
| 0 bis 0,11 | | Stickstoff (N) |
| 0 bis 0,005 | | Bor (B) |

Vorzugsweise weist die Schneide einen an den distalen Schneidkantenbereich, insbesondere direkt, anschließenden proximalen Schneidkantenbereich mit dem Grundgefüge des Bandkörpers auf. Beispielsweise wird die Schneide von diesen beiden Schneidkantenbereichen ausgebildet. Die Schneide weist damit neben dem distalen Schneidkantenbereich mit dem kaltverfestigten Gefüge auch einen proximalen Schneidkantenbereich mit dem Grundgefüge auf. Die erfindungsgemäße Schneide weist daher nicht nur eine besonders hohe Härte und Festigkeit auf, sondern ist auch vergleichsweise duktil. Damit können beispielsweise hohe mechanische Belastungen auf die Schneide vom Bandstahlmesser standfest aufgenommen werden.

Insbesondere kann sich das erfindungsgemäße Bandstahlmesser bei einem Werkzeug eignen. Beispielsweise kann es sich bei diesem Werkzeug um ein Stanzwerkzeug handeln.

In den Figuren ist beispielsweise der Erfindungsgegenstand anhand eines Ausführungsbeispiels näher dargestellt. Es zeigen
- Fig. 1: eine Darstellung zu einem teilweise dargestellten Bandstahlmessers im Querschnitt,
- Fig. 2: ein Härteverlauf zu den in Fig. 1 dargestellten Messpunkten und
- Fig. 3a, 3b: ein teilweise dargestelltes Spaltband im Querschnitt als Ausgangsmaterial zur Herstellung des nach Fig. 1 dargestellten Bandstahlmessers.

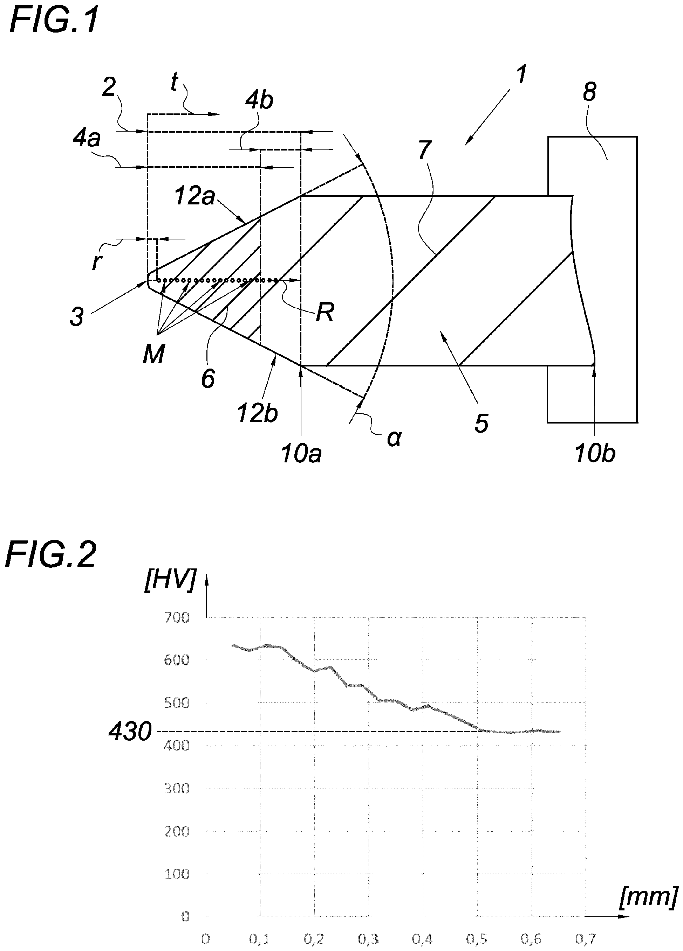

Nach Fig. 1 ist ein Bandstahlmesser 1 beispielsweise dargestellt. Am Bandstahlmesser 1 ist an dessen Bandkörper 5 eine symmetrische Schneide 2 mit einer Schneidkante 3 und einfachen Schneidfacetten 12a, 12b zu erkennen. Die Erfindung ist jedoch nicht auf solche eine Schneide 2 beschränkt, es sind beispielsweise eine seitlich versetzte Schneide und/oder Schneiden mit mehrfachen, beispielsweise zweifachen, Schneidfacetten vorstellbar, was nicht näher dargestellt worden ist.

Das Bandstahlmesser 1 besteht aus einer durch Kaltumformen verfestigbaren Stahllegierung, beispielsweise aus einem korrosionsbeständigen Cr-Ni-Stahl. Die Schneide 2 ist partiell (also höchstens abschnittsweise) in der Härte erhöht, und zwar im distalen Schneidkantenbereich 4a, der zumindest von der Schneide 2 die Schneidkante 3 aufweist. Die Schneide 2 befindet sich am Bandkörper 5, und zwar an dessen Längskante 10a.

Erfindungsgemäß findet diese Härtesteigerung des Schneidkantenbereichs 4a durch ein Kaltumformen, nämlich ein Kaltwalzen als kaltes Druckumformen (nach DIN 8583) statt. Dieses Kaltwalzen wird mehrstufig durchgeführt. Die Umformgrade diese Stufen unterscheiden sich. In all diesen Stufen wird gleichzeitig an den zwei sich an der Schneide 2 gegenüberliegenden Schneidfacetten 12a, 12b kaltgewalzt.

Dadurch entsteht in diesem distalen Schneidkantenbereich 4a ein kaltverfestigtes Gefüge 6, das sich in proximale Richtung R der Schneide (also von der Schneidkante 3 ausgehend entlang des Querschnitts des Bandstahlmessers 1 gesehen) eine verringerte Härte HV aufweist, wie in Fig. 2 zu erkennen. Zudem liegt die Härte des kaltverfestigten Gefüges 6 bis zumindest zu einer Härtetiefe t von 0,45 mm (Millimeter) stets über der mittleren Härte (Vickershärte) eines an dieses kaltverfestigte Gefüge 6 anschließenden Grundgefüges 7 des Bandkörpers 5. Diese beträgt stets mehr als 430 HV, gemessen nach EN ISO 6507, was in Fig. 2 im Vergleich mit den Messpunkten M der Fig. 1 erkannt werden kann. 430 HV, gemessen nach EN ISO 6507, entspricht der mittleren Härte des Grundgefüges 7 des Bandkörpers 5.

Das kaltverfestigte Gefüge 6 schließt an das Grundgefüge 7 des Bandkörpers 5 an. Die Schneide 2 weist neben dem kaltverfestigten Gefüge 6 des distalen Schneidkantenbereich 4a auch das Grundgefüge 7 in deren proximalen Schneidkantenbereich 4b auf, welcher Schneidkantenbereich 4b an den distalen Schneidkantenbereich 4a direkt anschließt, wie im Ausführungsbeispiel in Fig. 1 zu erkennen.

Da außerhalb des kaltverfestigten Gefüges 6 das Grundgefüge 7 des proximalen Schneidkantenbereichs 4b durch das erfindungsgemäße Kaltumformen, nämlich höchstens partiell an der Schneide 2, nicht plastisch mitumgeformt oder durch ein aus dem Stand der Technik bekanntes Härtungsverfahren beeinträchtigt worden ist, behält dieser Bereich des Bandmessers 1 seine ursprüngliche Festigkeit und Duktilität. Damit weist der distale Schneidkantenbereich 4a im Vergleich mit dem proximalen Schneidkantenbereich 4b einen geringen Volumenanteil an Martensit und/oder eine geringere Versetzungsdichte auf.

Dies lässt die plastische Biegsamkeit des Bandstahlmessers 1 zur Folge einer Schneidkontur in Längsrichtung unverändert, was ein Einsetzen der anderen Längskante 10b in ein schematisch dargestelltes Werkzeug 8, beispielsweise einer Stanze, handhabungsfreundlich zulässt. Zudem ist durch dieses ursprüngliche Grundgefüge 7 die Gefahr eines spröden Bruches des Bandstahlmessers 1 verringert.

Ein Bandstahlmesser 1 mit hoher Schneidleistung und Verschleißfestigkeit ist damit geschaffen.

Festigkeit und Härte des Bandstahlmessers 1 wird durch das kaltverfestigte Gefüge 6 des distalen Schneidkantenbereichs 4a garantiert - dies aufgrund der Versetzungen und des dehnungsinduzierten Verformungsmartensits in diesem Gefüge 6.

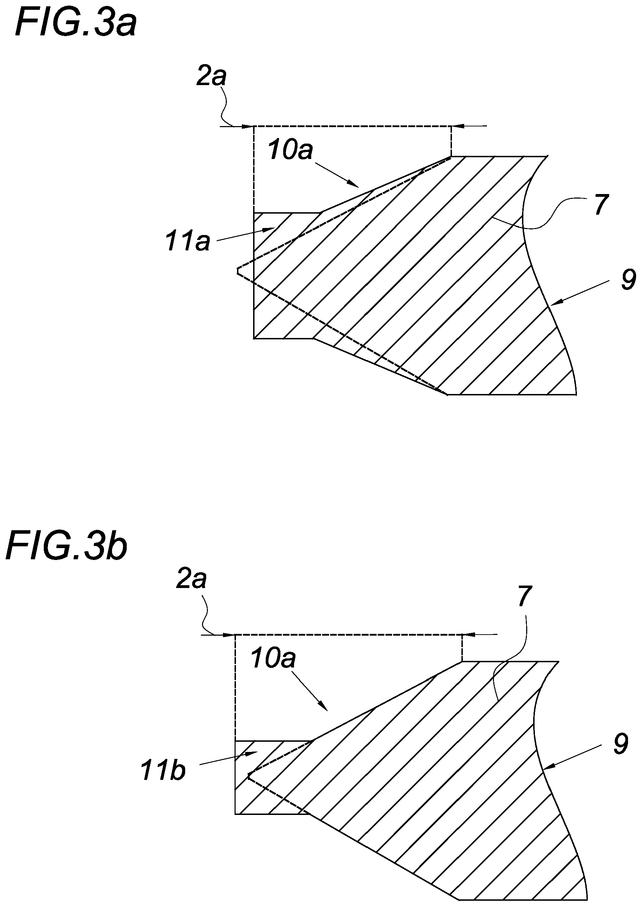

Kurze Beschreibung des Verfahrens:
So wurde erfindungsgemäß ein Metallband, nämlich Spaltband 9, aus einer austenitischen Edelstahllegierung X10CrNi18-8 (Nr. 1.4310), wie in der Materialnorm EN 10088-2 definiert, verwendet. Es wird ein Spaltband 9 mit der gewünschten Härte des Grundgefüges 7 bereitgestellt. Das an einer Längskante 10a eine Rohschneide 2a mit einem Aufmaß 11a, wie in Fig. 3a dargestellt, aufweisende Spaltband wird mit zwei gegenüberliegenden und zueinander geneigt stehenden Walzen an der Rohschneide 2a partiell kaltumgeformt. Andere Aufmaße 11b, wie in Fig. 3b dargestellt, sind vorstellbar.

Damit wird jene nach Fig. 1 dargestellte Schneide 2 unter Kaltumformung des Aufmaßes 11 geschaffen. Dieses Kaltumformen erfolgte in zwei Stufen, je mit einem gleichen Kaltumformgrad von 70 %, was zu einem Gesamtumformgrad von größer 90 % führte.

Damit bildet sich im austenitischen Grundgefüge 7 des Bandkörpers 5 ein distaler Schneidkantenbereich 4a mit dem kaltverfestigten Gefüge 6. Dieses kaltverfestigte Gefüge 6 weist neben Austenit auch dehnungsinduzierten Verformungsmartensit (im Wesentlichen α'-Verformungsmartensit) und Versetzungen auf, was die Härte der Schneide 2 an der Schneidkante 3 deutlich erhöht. An das kaltverfestigte Gefüge 6 schließt das austenitische Grundgefüge 7 an, das im Vergleich mit dem kaltverfestigten Gefüge 6 einen geringen Volumenanteil an Martensit und/oder eine geringere Versetzungsdichte aufweist.

Andere Grundgefüge 7 sind vorstellbar, beispielsweise ferritisch, ferritisch-perlitisches oder bainitisches Gefüge. Derartige Grundgefüge 7 verfestigen durch Kaltumformen zum kaltverfestigten Gefüge 6 aufgrund Versetzungen. Auch hier schließt das kaltverfestigte Gefüge 6 an das Grundgefüge 7 an, das im Vergleich mit dem kaltverfestigten Gefüge 6 einen geringen Volumenanteil an Martensit und/oder eine geringere Versetzungsdichte aufweist.

Anschließend wurde die Schneide durch Schleifen fein bearbeitet, um den gewünschten Schneidenwinkel α und Schneidenradius r einzustellen.

Distaler Schneidkantenbereich 4a mit kaltverfestigten Gefüge 6:
Versetzungsdichte = 1,4*10¹³ m⁻² gemessen gemäß der CMWP-Methode (Convolutional Multiple Whole Profile: G. Ribárik, T. Ungär, J. Gubicza, J. Appl. Cryst. 34 (2001) 669-767 bzw. G. Ribárik, J. Gubicza, T. Ungär, Mater. Sci. Eng. A 387-389 (2004) 343-347.)
Dehnungsinduzierter α'-Verformungsmartensit mit einem Volumenanteil 35,4 %, gemessen nach DIN EN ISO 17655, im Austenit. Der dehnungsinduzierte Verformungsmartensit liegt im Gefüge 6 fein verteilt mit gleichmäßiger Mikrostruktur vor.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Verfahren zum Härten einer Schneidkante (3) einer Schneide (2) eines, ein Grundgefüge (7) aufweisenden Bandkörpers (5), aus einer durch Kaltumformen verfestigbaren Stahllegierung, eines Bandstahlmessers (1), bei welchem Verfahren höchstens partiell an der Schneide (2) und das zumindest an der Schneidkante (3) ein Kaltumformen, insbesondere Kaltwalzen, durchgeführt und damit ein distaler Schneidkantenbereich (4a) mit einem kaltverfestigten Gefüge (6) erzeugt wird, dessen sich in proximale Richtung (R) der Schneide (2) verringernde Härte (HV) bis zumindest zu einer Härtetiefe (t) von 0,2 mm, insbesondere 0,45 mm, stets über der mittleren Härte (HV) des an dieses kaltverfestigte Gefüge (6) anschließenden Grundgefüges (7) des Bandkörpers (5) liegt.

2. Verfahren nach Anspruch 1, **dadurch gekennzeichnet, dass** an der Schneidkante (3) die Härte (HV) nach EN ISO 6507, insbesondere bis zumindest zu einer Härtetiefe (t) von 0,05 bis 0,10 mm, zumindest 580 HV, insbesondere zumindest 600 HV, beträgt.

3. Verfahren nach Anspruch 1 oder 2, **dadurch gekennzeichnet, dass** das Kaltumformen zumindest an der Schneidkante (3) mit einem Gesamtumformgrad größer 70 %, insbesondere größer 75 %, durchgeführt und/oder dass das Kaltumformen mehrstufig mit zueinander unterschiedlich oder gleich hohen Umformgraden durchgeführt wird.

4. Verfahren nach einem der Ansprüche 1 bis 3, **dadurch gekennzeichnet, dass** das Kaltumformen an zumindest zwei sich an der Schneide (2) gegenüberliegenden Schneidfacetten (12a, 12b), insbesondere gleichzeitig, durchgeführt wird.

5. Verfahren nach einem der Ansprüche 1 bis 4, **dadurch gekennzeichnet, dass** beim Kaltumformen ein Aufmaß (11a, 11b) an der Schneide (2) mitumgeformt wird.

6. Verfahren nach einem der Ansprüche 1 bis 5, **dadurch gekennzeichnet, dass** nach dem Kaltumformen an der Schneide (2) eine, insbesondere spanende, Feinbearbeitung, insbesondere ein Schleifen, erfolgt, womit ein Schneidenwinkel (α) der Schneide (2), insbesondere im Bereich 30 bis 60 Grad, und/oder einen Schneidenradius (r) an der Schneidkante (3), insbesondere bis zu 50 µm, beispielsweise zwischen 4 und 50 µm, eingestellt wird.

7. Bandstahlmesser mit einem, eine Schneide (2) mit einer Schneidkante (3) aufweisenden Bandkörper (5) aus einer kaltverfestigbaren Stahllegierung, wobei der Bandkörper (5) ein Grundgefüge (7) aufweist und wobei die Schneide (2) in einem distalen und die Schneidkante (3) aufweisenden Schneidkantenbereich (4a) eine, insbesondere durch ein Verfahren nach einem der Ansprüche 1 bis 6 hergestellte, Härte (HV) aufweist, **dadurch gekennzeichnet, dass** der distale Schneidkantenbereich (4a) ein kaltverfestigtes, insbesondere kaltgewalztes, Gefüge (6) aufweist, dessen sich in proximale Richtung (R) der Schneide (2) verringernde Härte (HV) bis zumindest zu einer Härtetiefe (t) von 0,2 mm, insbesondere 0,45 mm, stets über der mittleren Härte (HV) eines an dieses kaltverfestigte Gefüge (6) anschließenden Grundgefüges (7) des Bandkörpers (5) liegt.

8. Bandstahlmesser nach Anspruch 7, **dadurch gekennzeichnet, dass** an der Schneidkante (3) die Härte (HV) nach EN ISO 6507, insbesondere bis zumindest zu einer Härtetiefe (t) von 0,05 bis 0,10 mm, zumindest 580 HV, insbesondere zumindest 600 HV, beträgt.

9. Bandstahlmesser nach Anspruch 7 oder 8, **dadurch gekennzeichnet, dass** die Schneide (2) einen Schneidenwinkel (α) im Bereich von 30 bis 60 Grad und/oder einen Schneidenradius (r) an der Schneidkante (3), bis zu 50 µm, beispielsweise zwischen 4 und 50 µm, aufweist.

10. Bandstahlmesser nach einem der Ansprüche 7 bis 9, **dadurch gekennzeichnet, dass** das kaltverfestigte Gefüge (6) Versetzungen mit einer Versetzungsdichte von größer gleich 10¹³ m⁻² aufweist.

11. Bandstahlmesser nach einem der Ansprüche 7 bis 10, **dadurch gekennzeichnet, dass** das kaltverfestigte Gefüge (6) einen dehnungsinduzierten Verformungsmartensit mit einem Volumenanteil größer gleich 25 %, insbesondere von 25 bis 40 %, aufweist und/oder das Grundgefüge (7) des Bandkörpers (5) ein austenitisches Gefüge ist.

12. Bandstahlmesser nach Anspruch 11, **dadurch gekennzeichnet, dass** die Stahllegierung ein korrosionsbeständiger Cr-Ni Stahl ist.

13. Bandstahlmesser nach einem der Ansprüche 7 bis 10, **dadurch gekennzeichnet, dass** das Grundgefüge (7) des Bandkörpers (5) ein ferritisch, ferritisch-perlitisches oder bainitisches Gefüge ist.

14. Bandstahlmesser nach einem der Ansprüche 7 bis 12, **dadurch gekennzeichnet, dass** die Stahllegierung jeweils in Gew.-%
| | | |
|---|---|---|
| 0,01 bis 0,15, | insbesondere 0,05 bis 0,15, | Kohlenstoff (C), |
| 15,0 bis 20,0, | insbesondere 16,0 bis 19,0, | Chrom (Cr), |
| 6,0 bis 14,0, | insbesondere 6,0 bis 9,5, | Nickel (Ni), |
optional einzeln oder in Kombination aus der Gruppe:
| | | |
|---|---|---|
| 0 bis 2,0 | | Silizium (Si) |
| 0 bis 2,0 | | Mangan (Mn) |
| 0 bis 3,0, | insbesondere 0 bis 1,0, | Molybdän (Mo) |
| 0 bis 1,0 | | Kupfer (Cu) |
| 0 bis 0,30 | | Vanadium (V) |
| 0 bis 0,20 | | Titan (Ti) |
| 0 bis 0,20 | | Niob (Nb) |
| 0 bis 0,20 | | Aluminium (Al) |
| 0 bis 0,05 | | Phosphor (P) |
| 0 bis 0,01 | | Kalzium (Ca) |
| 0 bis 0,01 | | Schwefel (S) |
| 0 bis 0,11 | | Stickstoff (N) |
| 0 bis 0,005 | | Bor (B) |
und als Rest Eisen (Fe) sowie herstellungsbedingt unvermeidbare Verunreinigungen aufweist.

15. Bandstahlmesser nach einem der Ansprüche 7 bis 14, **dadurch gekennzeichnet, dass** die Schneide (2) einen an den distalen Schneidkantenbereich (4a), insbesondere direkt, anschließenden proximalen Schneidkantenbereich (4b) mit dem Grundgefüge (7) des Bandkörpers (5) aufweist, insbesondere aus diesen beiden Schneidkantenbereichen (4a, 4b) besteht.

16. Werkzeug, insbesondere Stanzwerkzeug, mit einem Bandstahlmesser (1) nach einem der Ansprüche 7 bis 15.
